# EUROPEAN PATENT APPLICATION

(11) **EP 2 595 459 A2**
(43) Date of publication of application: **22.05.2013**
(21) Application number: 12193084.6
(22) Date of filing: 16.11.2012
(51) Int. Cl.: H05B 41/04, H05B 41/288

(54) **Power supply for xenon lamps in an accelerated weathering test apparatus**

(30) Priority: 17.11.2011 US 201161561157 P
(71) Applicant: Atlas Material Testing Technology, Llc., Chicago, Illinois 60613 (US)
(72) Inventor: Mirsky, Gregory, Buffalo Grove, Illinois 60089 (US); Bandel, Michael, North Aurora, Illinois 60542 (US)
(74) Representative: WP Thompson

(57) **Abstract**

A power supply for use in an accelerated weathering test apparatus can control both the xenon lamp radiated spectrum and its intensity in order to fully simulate the sun's daily cycle, improve the ultraviolet output, reduce the infrared radiation, and compensate for the xenon lamp aging.

## Description

### RELATED APPLICATIONS

This application is a non-provisional application that claims the benefit of and priority to U.S. Provisional Application No. 61/561,157 filed November 17, 2011 and is hereby fully incorporated herein by reference.

### BACKGROUND

The present disclosure is related to power supplies for supplying power to a lamp in a weathering apparatus. The weathering device is used to simulate prolonged exposure to environmental elements. One such environmental element is sunlight. In order to accurately simulate exposure to sunlight, a weathering apparatus may use a high intensity lamp such as a xenon lamp. The present disclosure is related to a device to supply a xenon lamp with an irradiance spectrum shaped high-frequency sinusoidal current at minimum loss in order to control a radiated spectrum from such lamp and to using waveform shaping to manipulate the switching mode output voltage and current for obtaining a controllable xenon lamp radiated spectrum. As a result, the xenon lamp radiation spectrum is more precisely controlled during weathering tests in order to better simulate solar radiation, as well as improve xenon lamp output in the ultraviolet part of the radiated spectrum and reduce unwanted radiation in the infrared part of the spectrum. The system of the present disclosure further includes an ignition assisting reservoir of energy provided during pre-ignition phase of the lamp such that the lamp requires a less powerful igniter.

Conventional weathering apparatus and methods do not control any radiated spectrum or provide any mechanism for control of the xenon lamp radiated spectrum in the manner and method disclosed herein, and as a result are not as accurate. Additionally, existing xenon lamp power supply technology is based solely upon providing line frequency power ballasting, which is bulky, heavy, requires many features to provide limited control, and has no functionality to provide for electronic, universal power factor correction.

One known conventional device uses a pulsed DC mode of the xenon lamp operation, which is merely a modulation of the duty-cycle. Such a device is disadvantageous because it generates very high current abrupt surges that can destroy the cathode and reduce the life of the xenon lamp. Additionally, this conventional method does not accurately simulate the sun daily cycle.

In general, arc lighting AC output electronic power supplies for high intensity discharge lamps only regulated the current and/or power to the lamp. Additionally, limited lamp dimming was provided by allowing for control to reduce the magnitude of the lamp current. Typically, they were three stage power supplies consisting of a power factor corrector, a buck converter, and a low frequency AC inverter. They also required a separate igniter whose power was comparable to the whole power supply rated power to start the lamp. Irradiance control was non-existent, so as to not be considered.

Therefore, for devices that utilize gas discharge lamps and for devices that require the simulation of sunlight or some other irradiance spectrum, there exists a need for improved power supplies. Such needs include the ability to control the irradiance spectrum of the lamp to more accurately simulate the sun's daily cycle for use in devices such as accelerated weathering devices.

In addition, devices that utilize gas discharge lamps with known power supplies, require systems that can deliver a significant pulse of energy during ignition of the lamp. Also, the current control mechanisms of known power supplies can result in abrupt surges or spikes in current that can negatively impact the reliability and life of the gas discharge lamp. Therefore, improved power supplies are needed to provide ignition systems with lower power requirements such that operating costs of the device are reduced and the flexibility for choice of igniters is improved.

### SUMMARY

Generally, one aspect of the present disclosure may include an accelerated weathering apparatus that may include a power supply that can control both the xenon lamp radiated spectrum and its intensity in order to fully simulate the sun's daily cycle, improve the ultraviolet output, and reduce the infrared radiation. In one embodiment, a power supply may include a high frequency inverter for obtaining a controllable, waveform defined, output power being supplied to a xenon lamp. This provides the ability to develop a spectrum shaped lamp irradiance, a resonant circuit as a current source for a direct xenon lamp supply, and at the same time, a high-power, high voltage, xenon lamp backup for reliable arc initiation and setting at lower ignition voltage with a less powerful igniter. As a result, the embodiment may be more compact and less expensive due to use of high frequency power conversion technology and waveform manipulation, as well as have an ability to be computer monitored and controlled locally and/or remotely, even via the internet.

Another aspect of the present disclosure may include an accelerated weathering device that may include using a near resonant high frequency switching to create a lamp pre-ignition condition that can be advantageously configured to assist in lamp ignition. The size and energy requirements of known igniters may be reduced using aspects of the present disclosure as well as using other previously considered impractical methods of lamp ignition due to the back-up of high voltage and stored energy of some embodiments. The present disclosure allows for increased flexibility when choosing ignition type with potential for lower costs and increased operating life.

In another aspect of the present disclosure, a power supply is provided that includes a spectrum shaping component that is capable of providing a signal that controls the irradiance spectrum of a lamp.

In another aspect of the present disclosure, a power supply is provided that includes a pre-conditioning component that supplies a lamp with a high voltage and a reservoir of back-up energy to assist in the ignition and operation of the lamp.

In yet another aspect of the present disclosure, a weathering device is provided that includes a power supply that is able to control the irradiance spectrum of a lamp such that it simulates the sun's daily cycle.

### BRIEF DESCRIPTION OF THE DRAWINGS

Figure 1 illustrates one embodiment of the power supply of the present disclosure.

Figure 2 illustrates another embodiment of the power supply of the present disclosure.

Figure 3 illustrates another embodiment of the power supply of the present disclosure.

Figure 4 illustrates another embodiment of the power supply of the present disclosure.

Figure 5 illustrates another embodiment of the power supply of the present disclosure.

Figure 6 is a flowchart showing a method of operating the lamp and power supply of the present disclosure.

Figure 7 illustrates one example voltage profile during pre-ignition using one of the power supply embodiments of the present disclosure.

Figure 8 illustrates an example of the irradiance spectrum shaping output produced using one of the power supply embodiments of the present disclosure.

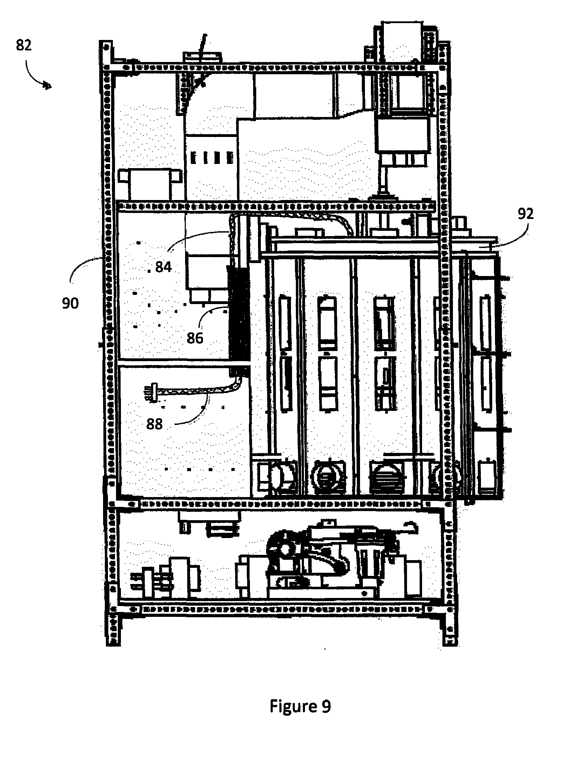

Figure 9 is a side sectional view of an example weathering device including an example power supply of the present disclosure.

Figure 10 illustrates one embodiment of the power supply output control of the present disclosure.

Figure 11 illustrates another embodiment of the power supply output control of the present disclosure.

### DETAILED DESCRIPTION

The following disclosure as a whole may be best understood by reference to the provided detailed description when read in conjunction with the accompanying drawings, drawing description, abstract, background, field of the disclosure, and associated headings. Identical reference numerals when found on different figures identify the same elements or a functionally equivalent element. The elements listed in the abstract are not referenced but nevertheless refer by association to the elements of the detailed description and associated disclosure.

The present disclosure is not limited to the particular details of the apparatus depicted, and other modifications and applications may be contemplated. Further changes may be made in the apparatus, device or methods without departing from the true spirit of the scope of the disclosure herein involved. It is intended, therefore, that the subject matter in this disclosure should be interpreted as illustrative, not in a limiting sense.

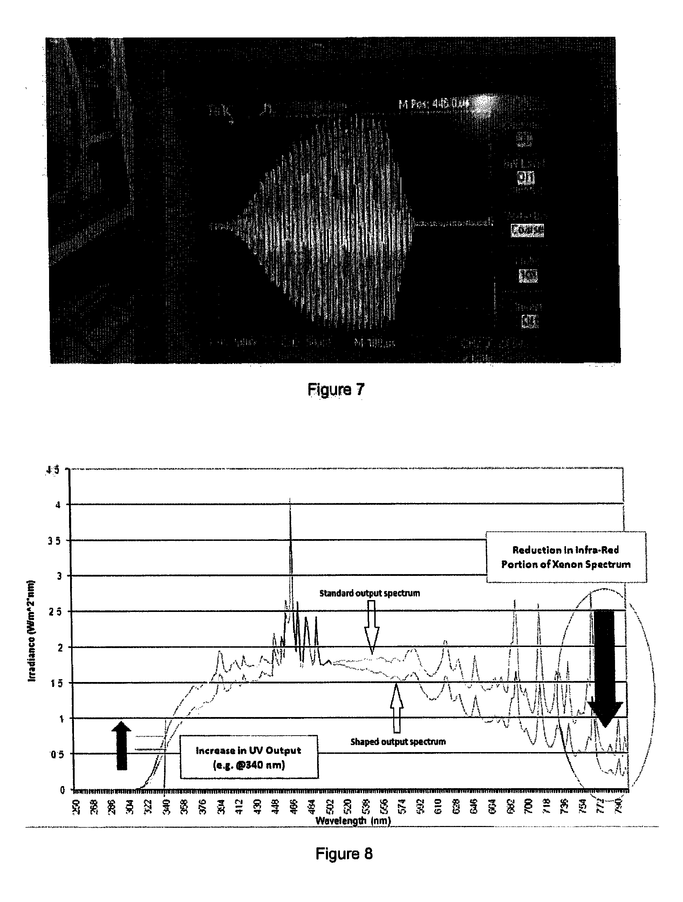

In one embodiment of the present disclosure, a weathering device is provided that includes a system for generating simulated sunlight as shown in Figure 8. The system for generating simulated sunlight is located inside weathering device (82) within housing (90) and is operative to interact with test samples located on rack (92). The system for generating simulated sunlight can interact with many different weathering or testing apparatuses such as the embodiment shown in Figure 8 or the weathering testing systems disclosed in U.S. Patent Numbers 4,957,011, 5,226,318, or 5,503,032, the contents of which are incorporated herein by reference. The example system for generating simulated sunlight includes power supply (86) and lamp (10). In this example the lamp (10) is a xenon lamp oriented vertically within rack (92) of weathering device (82). In this example configuration, power supply (86) is located inside of weathering device (82) but outside rack (92) and the test chamber in order to be protected from the elements that are subjected to the test samples within the weathering device.

Lamp (10), in this example, is a xenon lamp. However, other gas discharge lamps can be used with the present disclosure including the embodiments of power supply (86) described herein. A xenon lamp is useful in the presently disclosed context for a xenon lamp's ability to simulate sunlight. Other lamps, however, may be used with the teachings of the present disclosure regarding the ignition of and irradiance spectrum shaping of other gas discharge lamps.

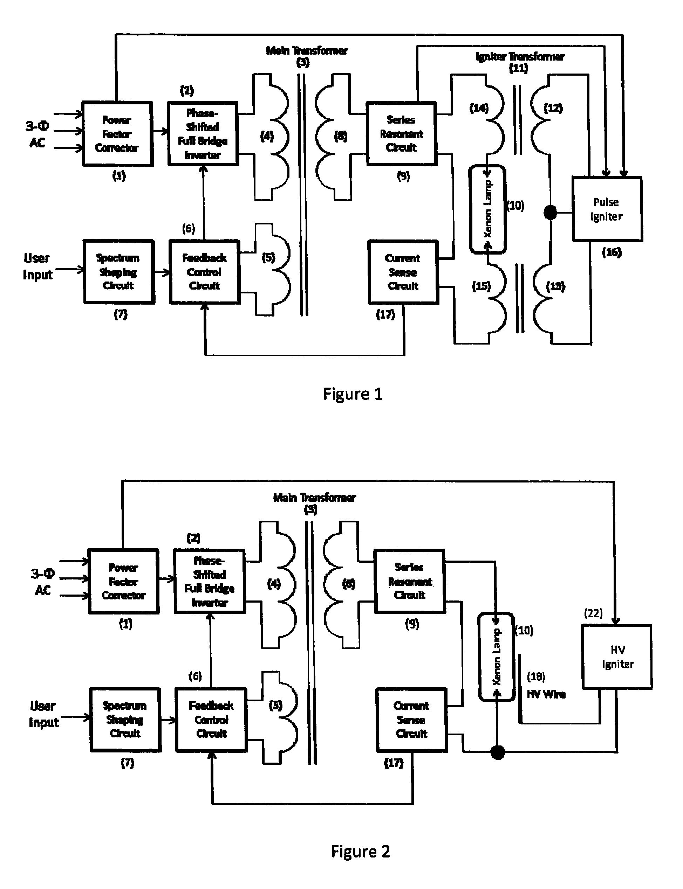

Figure 1 shows an embodiment of power supply (86). Generally, the basic concept is a waveform shaped output, obtained through a pulse-width modulation of a high frequency, switching mode inverter power supply for AC Xenon powered lamps that allows for enriching the output current spectrum with low frequency, (with respect to the high frequency) components. In one embodiment, the device may be treated as a class D amplifier.

In the embodiment as shown in Fig. 1, the 3-phase AC mains drives a power factor corrector (1) that is capable of operating over a very wide input voltage range while maintaining a high power factor and low current total harmonic distortion. The power factor corrector (1) supplies output power to a phase-shifted full bridge inverter (2) in the form of DC voltage and current.

The phase-shifted full bridge inverter (2) receives power from the power factor corrector (1) and signal control from the feedback control circuit (6). It delivers power to the main transformer (3) via primary winding (4). The primary winding (4) of main transformer (3) loads the phase-shifted full-bridge inverter (2). A main secondary winding (8) transfers power to the series resonant circuit (9). An additional secondary winding (5) is a voltage feedback signal source to the feedback control circuit (6) to sense the status of power being transferred through the main transformer (3) and provide for necessary control.

The feedback control circuit (6) signals the phase-shifted full-bridge inverter (2), providing the necessary information for output control and regulation of the full system output power. The feedback control circuit (6) is also signaled by the spectrum shaping circuit (7). The feedback control circuit (6) senses voltage via the main transformer (3) secondary winding (5) and current sense circuit (17). The spectrum shaping circuit (7) signals a specific waveform construction to the feedback control circuit (6), and, it allows for user input control of the feedback loop current by providing for selection of, and where required, additional output spectrum shaping can occur.

The series resonant circuit (9) transfers power to the xenon lamp (10) during normal operation. It also initiates energy support for the pulse igniter (16) through the igniter transformer secondary windings (14) and (15) by creating a base voltage across the xenon lamp (10) to help start the lamp and provide sustaining energy once an ignition arc is established. Series resonant circuit (9) couples to xenon lamp (10) through igniter transformer (11), secondary windings (14) and (15) and current sense circuit (17). The primary windings (12) and (13) of igniter transformer (11) are driven by the pulse igniter (16), which is signaled by the unloaded series resonant circuit (9) during the pre-ignition and ignition phases of lamp start-up. The pulse igniter (16) pulses the igniter transformer (11) primary windings (12) and (13) to create a high enough voltage on the igniter transformer (11) secondary windings (14) and (15) to ignite the lamp by inducing an alternating current arc to flow between lamp cathodes. The pulse igniter (16) is fed from the power factor corrector (1) output for the best stability. Secondary windings (14) and (15) may be wound such that the starting points do not impose additional impedance on lamp (10) current development but produce high differential voltage across lamp (1) when pulse igniter (16) starts.

Current sense circuit (17) is a circuit configured to supply a feedback signal to feedback control circuit (6) that indicates the state of lamp (10) such that the power supply can manage or correct the power output through phase-shifted full bridge inverter (2). Current sense circuit (17) as shown in Figure 1 in one embodiment is in series between the igniter transformer (11) secondary windings (14) and (15) and series resonant circuit (9).

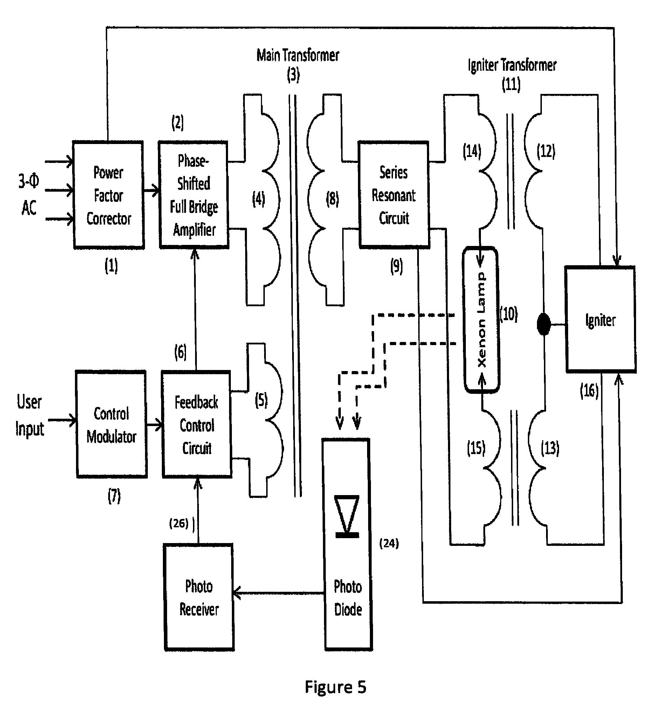

In another embodiment, as shown in Figure 5, current sense circuit may include photo-sensor (24) connected to the photo-receiver (26), which in turn is connected to the feedback control circuit (6) and can assist in irradiance stabilization and aging compensation as well as assist in irradiance spectrum shaping. In addition to or in place of photo sensor (24) and photo receiver (26) a current sensor can be used assist to adjust, monitor, or control the voltage and the current.

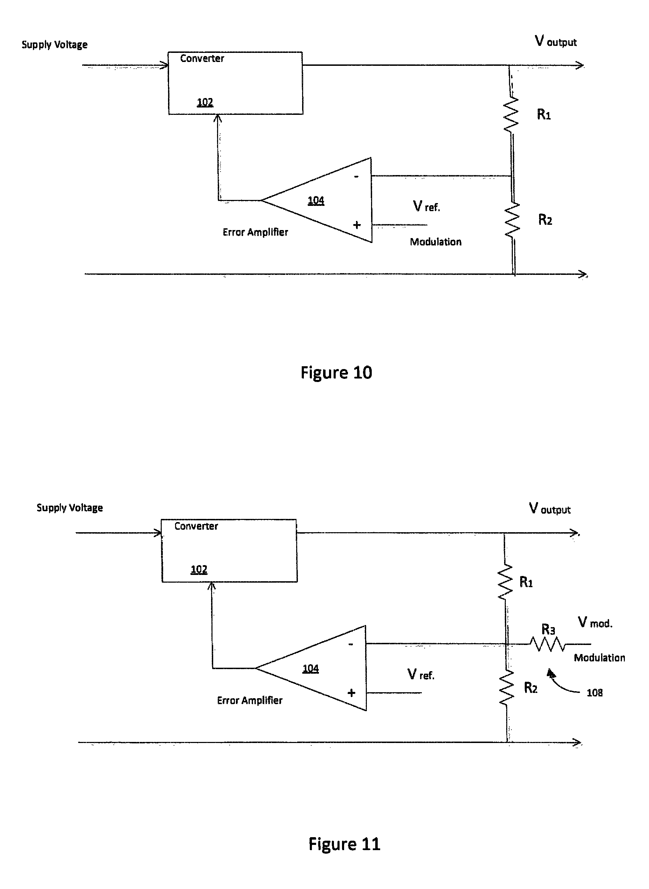

The modulation of current in power supply (86) can be accomplished via various methods to accomplish the irradiance spectrum shaping of the present disclosure. One embodiment of the power supply output control is shown in Figure 10. In this embodiment, error amplifier (104) compares the output voltage/current to the reference signal and controls the converter (102) such that the output voltage/current is modified to take a predetermined shape such that lamp (10) produces a predetermined and reproducible irradiance spectrum.

Figure 11 shows another embodiment of the power supply output control. In this embodiment, a modulated signal is introduced in the feedback loop through resistor (108). In this manner the reference signal at error amplifier (104) remains intact and the modulated signal can control the output current/voltage through converter (102). By varying the modulated signal, the output signal can be varied so that the current at lamp (10) can be much higher than the RMS value and at other times, much lower. Through this technique the irradiance spectrum output of lamp (10) can be varied to increase UV output and suppress infrared output.

Figure 8 is a chart showing an example irradiance output of lamp (10) when used in conjunction with one example power supply of the present disclosure. As shown and referenced above, the portion of the irradiance spectrum in the UV portion of the spectrum is increased while the portion in the infrared portion of the spectrum is reduced.

In another aspect of the present disclosure, the power supply includes an ignition system with ignition assistance and an igniter element. As shown in Figure 1, ignition assistance includes series resonant circuit (9). During pre-ignition, series resonant circuit (9) develops a reservoir of back-up energy that is available to lamp (10) such that a less powerful igniter is required for ignition of lamp (10).

In operation of one embodiment of the present disclosure as shown in Fig. 1, the xenon lamp (10) may be connected to its output to ignite and run as desired. At power on there is a pre-ignition phase when the xenon lamp (10) is still cold and does not present any load to the series resonant circuit (9). This is when the voltage across the xenon lamp (10) runs up to a magnitude of a few kilovolts, allowing pre-ionization streamers to form and begin to lower the very high impedance of the lamp. This is also when the series resonant circuit (9) builds and holds the energy of a few Joules for use in backing up the igniting process synchronized between the series resonant circuit (9), the igniter transformer (11), and pulse igniter (16) until the moment ignition occurs.

At ignition, the arc in the xenon lamp (10) establishes itself by means of a high voltage pulse from the pulse igniter (16) coupled through the igniter transformer (11) to the xenon lamp (10). Once an arc occurs, the lamp impedance is abruptly reduced and there is no longer a need for an ignition pulse from the pulse igniter (16). The xenon lamp (10) now shunts the energy of the series resonant circuit (9) through the igniter transformer (11) secondary windings (14) and (15) sustaining the ignition arc, reducing output voltage to that normally required for the lamp, and setting up constant lamp current.

The main factors in the determination of current magnitude through the xenon lamp (10) are the output voltage and frequency delivered by the secondary winding (8) of the main transformer (3), the inductor and capacitor elements, (not shown, but known to one of ordinary skill in the art) that determine the tuned frequency of the series resonant circuit (9), and inductance value of the inductor element in the series resonant circuit (9).

The spectrum shaping circuit (7) may be used to adjust irradiance spectrum of the xenon lamp (10) as determined by setting selection via user input. This is performed by using a waveform generator within spectrum shaping circuit (7) to act upon the feedback signaling through the feedback control circuit (6) and adjust or shape the xenon lamp (10) output current envelope. The lamp irradiance spectrum control is now governed by controlling the shape of the overall current envelope flowing through the xenon lamp (10). Therefore, by changing or trimming the shape of the signal waveform generated in the spectrum shaping circuit (7) one can adjust the xenon lamp (10) irradiance spectrum to a desired one or within a desired range. The irradiance spectrum variation during this adjustment can be monitored and verified by means of a spectroradiometer or spectrum analyzer of appropriate range.

Other embodiments of the power supply of the present disclosure include alternative configurations of the ignition system and ignition assistance and igniter element. In one example, shown in Figure 2, the ignition system includes high voltage (HV) wire (18) which is driven from a low power, high voltage igniter. Here, the xenon lamp (10) is coupled through the current sense circuit (17) back to the series resonant circuit (9). High voltage igniter (22) is also referenced by connection to the bottom of the xenon lamp (10), receives signal from the power factor corrector (1), and is designed to generate a high voltage on HV wire (18) that is synchronized to occur at a point within the excitation envelope of the resonant circuit (9) during the transfer from pre-ignition to lamp ignition. In one example, HV wire (18) can be a thin nickel wire wound at a very large pitch around the lamp.

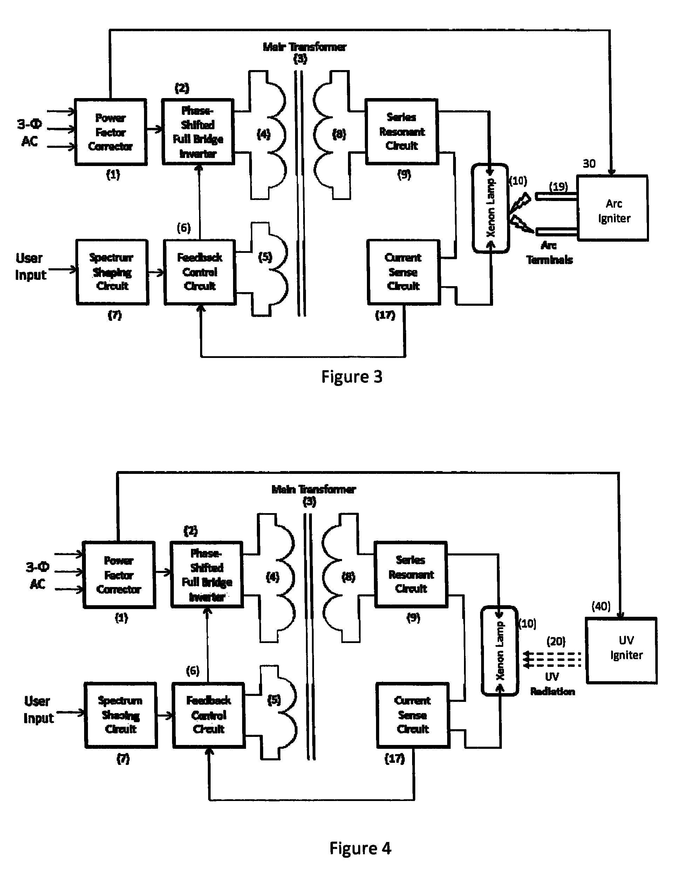

In another embodiment of the power supply of the present disclosure, shown in Figure 3, the ignition system includes electrostatic arc terminals (19) driven by arc igniter (30). Here the power factor corrector (1) signals arc igniter (30) and the xenon lamp (10) current is strictly coupled through the current sense circuit (17) back to the series resonant circuit (9) without any lamp reference connection required for arc igniter (30). Again and during the pre-ignition build-up of the series resonant circuit (9) the ignition is initiated through electrostatic discharge with the lamp between the arc terminals (19).

In still another embodiment of the power supply of the present disclosure, shown in Figure 4, the ignition system includes a UV radiation source (20) directed at the lamp. Here the power factor corrector (1) signals UV igniter (40) and the xenon lamp (10) is excited by UV radiation source (20) emitted by UV igniter (40). The mechanism here is to apply energy in the form of UV radiation to excite the xenon lamp (10) such that the few kilovolts expressed across the xenon lamp (10) by the series resonant circuit (9) during pre-ignition becomes sufficient to ignite the lamp. In one example, UV ignition is accomplished by a short-time pulse of UV radiation applied to the lamp (10) from an external source. Example sources of UV radiation include a UV laser, a compact UV-VIS fiber light source or other suitable UV sources.

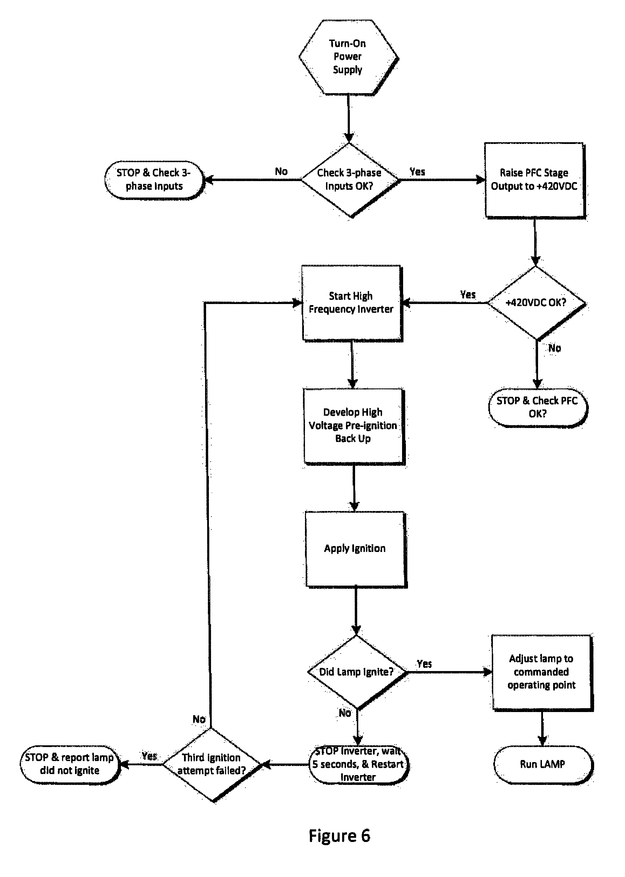

The reservoir of back-up energy provided by the power supply during pre-ignition is depicted in the image of Figure 7. Figure 7 shows one example of the voltage profile generated during the pre-ignition phase of operation. During such pre-ignition phase, the voltage across lamp (10) can run in the magnitude of a few kilovolts. Ignition of lamp (10) using any of the embodiments of the power supply can be operated using the flowchart shown in Figure 6. Once ignition is achieved, lamp (10) can be operated to achieve the irradiance spectrum desired by the user.

The preceding detailed description is merely some examples and embodiments of the present disclosure and that numerous changes to the disclosed embodiments can be made in accordance with the disclosure herein without departing from its spirit or scope. The preceding description, therefore, is not meant to limit the scope of the disclosure but to provide sufficient disclosure to one of ordinary skill in the art to practice the invention without undue burden.

## Claims

1. A weathering device including a power supply for operating a lamp, the power supply comprising:
an irradiance spectrum shaping component comprising:
a current sense circuit operative to provide a signal to a feedback control circuit regarding operating conditions of the lamp;
a feedback control circuit operative to provide a signal to modify the operating conditions of the lamp; and
a spectrum shaping circuit operatively connected to the feedback control circuit and operative to provide a modulated signal such that an irradiance spectrum of the lamp can be controlled; and
an ignition system comprising:
a series resonant circuit operatively connected to the lamp and configured to pre-condition the lamp with high voltage and to produce a reservoir of back-up energy to assist in the ignition of the lamp; and
an igniter operatively connected to the lamp and operative to ignite the lamp.

2. A power supply for operating a lamp in a weathering device, the power supply comprising:
a current sense circuit operative to provide a signal to a feedback control circuit regarding operating conditions of the lamp;
a feedback control circuit operative to provide a signal to modify the operating conditions of the lamp; and
a spectrum shaping circuit operatively connected to the feedback control circuit and operative to provide a modulated signal such that an irradiance spectrum of the lamp can be controlled.

3. The power supply of claim 2 wherein the irradiance spectrum includes an increased ultra violet output and a reduced infra-red output when compared against the irradiance spectrum of the lamp without the modulated signal.

4. The power supply of claim 2 or claim 3 wherein the current sense circuit further comprises a photo sensor and a photo receiver.

5. A power supply for operating a lamp in a weathering device, the power supply comprising an ignition system that includes:
a series resonant circuit operatively connected to the lamp and configured to pre-condition the lamp with high voltage and configured to produce a reservoir of back-up energy to assist in the ignition of the lamp; and
an igniter operatively connected to the lamp and operative to ignite the lamp.

6. The power supply of claim 5 wherein the lamp requires the igniter to produce a first energy level to ignite when the series resonant circuit does not pre-condition the lamp with high voltage and produce the reservoir of back-up energy and a second energy level when the series resonant circuit does pre-condition the lamp with high voltage and produce the reservoir of back-up energy, the first energy level being higher than the second energy level.

7. The power supply of claim 5 wherein the igniter is a high voltage wire.

8. The power supply of claim 5 wherein the igniter is an arc igniter that produces an electrostatic discharge to ignite the lamp.

9. The power supply of claim 5 wherein the igniter is a UV igniter that emits ultra-violet radiation to ignite the lamp.

10. A method of operating a lamp for use in a weathering device, the method comprising:
preconditioning the lamp with high voltage from a series resonant circuit such that an energy level to ignite the lamp is reduced from a state wherein no preconditioning occurs; and
igniting the lamp with an igniter.

11. The method of claim 10 wherein the igniter is a high voltage wire.

12. The method of claim 10 wherein the igniter is an arc igniter that produces an electrostatic discharge to ignite the lamp.

13. The method of claim 10 wherein the igniter is a UV igniter that emits ultra-violet radiation to ignite the lamp.

14. A method of operating a lamp in a weathering device, the method comprising:
operating a lamp with a power supply that controls the lamp operating conditions; and
introducing a spectrum shaping signal that modifies the lamp operating conditions such that a predefined irradiance spectrum is produced.

15. The method of claim 14 wherein the spectrum shaping signal is a shaped waveform current configured to produce increased ultra violet output and reduced infrared output of the lamp.
